# EUROPEAN PATENT APPLICATION

(11) **EP 1 986 393 A1**
(43) Date of publication of application: **29.10.2008**
(21) Application number: 07710946.0
(22) Date of filing: 14.02.2007
(51) Int. Cl.: H04L 29/06, H04L 12/28, H04L 12/46, H04L 12/66, H04Q 7/22

(54) **THE METHOD AND SYSTEM OF MULTIMEDIA RESOURCE SCHEDULING**

(30) Priority: 18.02.2006 CN 200610033774
(71) Applicant: Huawei Technologies Co., Ltd., Longgang District, Shenzhen Guangdong 518129 (CN)
(72) Inventor: YAN, Jun, Shenzhen, Guangdong 518129 (CN); LI, Jincheng, Guangdong 518129 (CN); WU, Xiangyang, Guangdong 518129 (CN)
(74) Representative: Casalonga, Axel
(86) International application number: PCT/CN2007/000524
(87) International publication number: WO 2007/093124

(57) **Abstract**

An IMS-based media resource scheduling method includes: initiating a media resource request by an Application Server (AS) to a media routing functional entity; determining a media server by the media routing functional entity; and routing the media resource request to the determined media server. The disclosure also provides an IMS-based media resource scheduling system, a Media Resource Locating Function (MRLF), a Media Resource Broker Function (MRBF), and a Media Resource Function Controller (MRFC). According to the disclosure, the media resource scheduling process is implemented and the user's QoS requirement is satisfied by selecting a suitable one from at least one media server for providing stream media service to the UE.

## Description

### CLAIM OF PRIORITY

The present application claims benefit of priority from Chinese patent application Serial No.200610033774.X, entitled "Media Resource Scheduling Method in IMS Networks", filed with SIPO on 2/18/2006, the entirety of which is incorporated herein by reference.

### FIELD OF THE INVENTION

The invention relates to a stream media communication technique, and more particularly, to an IMS-based media resource scheduling technique.

### BACKGROUND

With rapid progress and wide application of multimedia technology and communication technology, multimedia communication technology has become an inevitable development trend in the communication field. In conventional multimedia communication systems, various media resources, for example, ring tones, color images, Flash motion pictures or the like, are stored on a media server. With the deployment of stream media service, real-time video applications including on-line movie and TV viewing have become possible, and these applications make the media resources increasingly rich.

IP multimedia subsystem (IMS) is defined in the 3GPP R5/R6 standard. In the IMS, IP packet fields act as the bearer channel for transportation of control signaling and media, and Session Initiation Protocol (SIP) is used for call control signaling. Thus, traffic management, session control and bearing access are separated from each other.

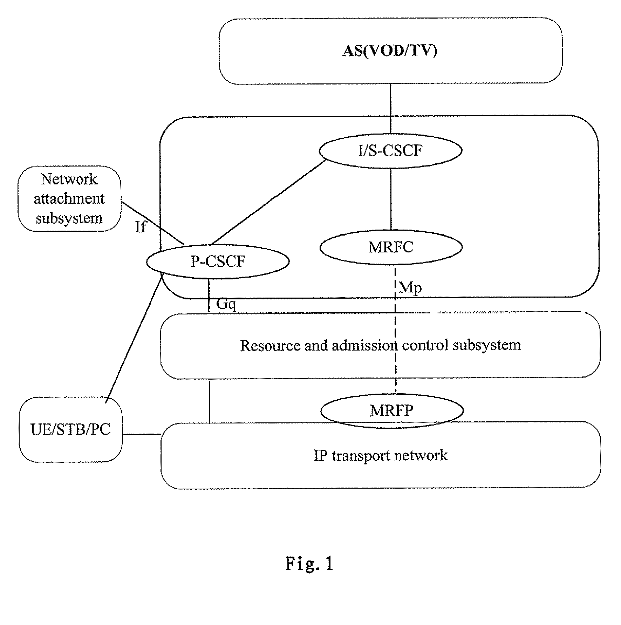

Fig.1 illustrates an IMS network architecture associated with media resources. As shown in Fig.1, the IMS network includes an Application Server (AS), a Proxy-CSCF (P-CSCF) unit, a Serving CSCF (S-CSCF) unit, a Multimedia Resource Function Controller (MRFC) unit and a Multimedia Resource Function Processor (MRFP) unit. Due to separation of bearing and controlling, the media server is distributed across two functions, that is, the MRFC and the MRFP. The MRFC is configured to control media resources, and the MRFP is configured to carry specific media resources. An MRFC may control at least one MRFP. If a user wants to obtain a media resource, he or she initiates a request to the AS, which in turn responds with information about the media server consisting of the MRFC and the MRFP. Then, the user may request the desired resources from the media server based on the obtained address. In Fig.1, the dashed line between the MRFC and the MRFP indicates that messages exchanged between the MRFC and the MRFP do not pass the resource and admission control subsystem.

Currently, media resources on the Internet have demonstrated explosive growth. However, only limited media resources can be stored on a media server. Accordingly, in a future IMS network architecture, the same media resource may be distributed across several MRFs. But a problem will arise, that is, how to select an optimal media server to serve the user after the user selects a media resource. Whether the selected media server is suitable or not has a direct impact on the quality of service (QoS) provided to the user and the user's own experience. Therefore, media resource scheduling will become a special concern inevitably.

However, in the current IMS network architecture, the media resource scheduling in a case where there is only one media server or an equivalent functional entity is considered generally. Furthermore, there is no media resource scheduling mechanism among IMS network architectures. Therefore, there is no feasible media resource scheduling mechanism in and among IMS network architectures.

### SUMMARY

According to embodiments of the invention, an object is to provide a media resource scheduling method, system, a Media Resource Locating Function (MRLF), a Media Resource Broker Function (MRBF), and a Media Resource Function Controller (MRFC), so as to address the media resource scheduling problem in and among IMS network architectures.

To fulfill the above object, an embodiment of the invention provides an IMS-based media resource scheduling method, including: initiating a media resource request by an Application Server (AS) to a media routing functional entity; determining a media server by the media routing functional entity; and routing the media resource request to the determined media server.

Another embodiment of the invention provides an IMS-based media resource scheduling method, including: requesting media server information by an AS from a media locating functional entity; determining a media server by the media locating functional entity and returning information about the determined media server to the AS; and initiating a media resource request to the determined media server by the AS.

Another embodiment of the invention provides an IMS-based media resource scheduling method, including the following steps performed by an AS: obtaining information about at least one media server in the present IMS domain and/or other IMS domains; determining a media server from the at least one media server; and initiating a media resource request to the determined media server.

Another embodiment of the invention provides an IMS-based media resource scheduling system, including: an AS; an MRLF or MRBF; and at least one media server. The MRLF or MRBF is in communication with the AS and the at least one media server, the MRLF or MRBF is configured to determine a media server for providing stream media service to a UE, and the AS is configured to initiate or receive a stream media service request sent from the UE and return information about the media server determined by the MRLF or MRBF to the UE.

Another embodiment of the invention provides an IMS-based media resource scheduling system, including: an AS and at least one media server. The media server is configured to determine a media server for providing stream media service to a UE, and the AS is configured to initiate or receive a stream media service request sent from the UE and return information about the determined media server to the UE.

Another embodiment of the invention provides an IMS-based MRLF, including: a request receiving unit, configured to receive a request for providing media server information; a media server determining unit, configured to determine a media server for providing stream media service to a UE based on the received request; and a media server information providing unit, configured to provide information about the determined media server to an AS.

Another embodiment of the invention provides an IMS-based MRBF, including: a request receiving unit, configured to receive a media resource request; a media server determining unit, configured to determine a media server for providing stream media service to a UE based on the received media resource request; and a request forwarding unit, configured to forward the received media resource request to the determined media server.

Another embodiment of the invention provides an IMS-based MRFC, including: a request receiving unit, configured to receive a media resource request; a media server determining unit, configured to determine a media server for providing stream media service to a UE based on the received media resource request; and a request forwarding unit, configured to forward the received media resource request to the determined media server.

Another embodiment of the invention provides an IMS-based media resource control functional entity, independent of an MRFC and configured to control at least one media resource delivery functional entity which stores stream media content, including: a request receiving unit, configured to receive a media resource request; a media server determining unit, configured to determine a media server for providing stream media service to a UE based on the received media resource request; and a request forwarding unit, configured to forward the received media resource request to the determined media server.

In the embodiments of the invention, the media resource scheduling process is implemented and the user's QoS requirement is satisfied by selecting a suitable one from at least one media server to provide stream media service to the UE

### BRIEF DESCRIPTION OF THE DRAWINGS

Fig.1 is a schematic diagram illustrating a current IMS network architecture associated with media resources;

Fig.2 is a flow chart illustrating a first embodiment of the method according to the invention;

Fig.3 is a flow chart illustrating a second embodiment of the method according to the invention;

Fig.4 is a flow chart illustrating a third embodiment of the method according to the invention;

Fig.5 is a flow chart illustrating a fourth embodiment of the method according to the invention;

Fig.6 is a flow chart illustrating a fifth embodiment of the method according to the invention;

Fig.7 is a schematic diagram illustrating a first embodiment of the IMS-based media resource scheduling system according to the invention;

Fig.8 is a schematic diagram illustrating a second embodiment of the IMS-based media resource scheduling system according to the invention; and

Fig.9 is a schematic diagram illustrating a third embodiment of the IMS-based media resource scheduling system according to the invention.

### DETAILED DESCRIPTION

Detailed descriptions are made below to embodiments of the method and the system according to the invention with reference to accompanying drawings.

First, descriptions are made below to the general technical solution according to the method embodiments of the invention.

An embodiment of the invention provides an IMS-based media resource scheduling method, including: initiating a media resource request by an AS to a media routing functional entity; determining a media server by the media routing functional entity; and routing the media resource request to the determined media server.

The media server determined by the media routing functional entity may be a media server that the media routing functional entity selects from at least one media server in the present IMS domain and/or other IMS domains, preferably an optimal media server, of course.

The media routing functional entity may determine the media server based on at least one of: CID; description information of the media SDP for a UE; location information about the UE; capability information about the UE; context information about the UE or the user of the UE; and steam media content distribution information and/or status information about at least one media server in the present IMS domain and/or other IMS domains collected by the media routing functional entity.

The steam media content distribution information and/or status information about a media server in the present IMS domain or other IMS domains collected by the media routing functional entity may be obtained through interactions between the media routing functional entity and the media server and/or other media routing functional entities in the present IMS domain or other IMS domains.

The media routing functional entity may select a media server from at least one media server in the other IMS domains by: the media routing functional entity interacting with a media routing functional entity in the other IMS domains, and obtaining information about the at least one media server; and the media routing functional entity selecting a media server from the at least one media server.

The media routing functional entity may select a media server from at least one media server in other IMS domains by: the media routing functional entity forwarding the media resource request to a media routing functional entity in other IMS domains; the media routing functional entity in other IMS domains selecting a media server from at least one media server in the other IMS domains; and the media routing functional entity in other IMS domains providing information about the selected media server to the media routing functional entity.

The media server determined or selected by the media routing functional entity may include a media resource control functional entity and a media resource delivery functional entity.

After the media routing functional entity routes the media resource request to the determined media resource control functional entity, the method may further include: the media resource control functional entity selecting one from a plurality of the controlled media resource delivery functional entities; and the media resource control functional entity returning information about the selected media resource delivery functional entity to the AS directly or via an IMS routing functional entity.

The media resource control functional entity may select the media resource delivery functional entity based on media resource or content distribution information and information about the load of the media resource delivery functional entities.

If a Serving Call Session Control Function (S-CSCF) unit is provided between the AS and the media routing functional entity, the AS may initiate a media resource request to the media routing functional entity by: the AS sending the media resource request message to the S-CSCF; and the S-CSCF routing the media resource request message to the media routing functional entity.

The S-CSCF may route the media resource request message to the media routing functional entity by: routing the request message directly to the media routing functional entity when the S-CSCF identifies that the Request URI in the media resource request message is the SIP URI of the media routing functional entity; and modifying the Request URI to the SIP URI of the media routing functional entity and routing the modified media resource request message to the media routing functional entity when the Request URI is a wildcard.

When the media routing functional entity routes the media resource request to the determined media server, the method may further include: determining whether to participate in subsequent message exchanges between the AS or S-CSCF and the determined media server; adding its own URI to the Record-Route or Route field of the media resource request message when determining to participate in subsequent message exchanges between the AS or S-CSCF and the determined media server; and not adding its own URI to the Record-Route or Route field of the media resource request message when determining not to participate in subsequent message exchanges between the AS or S-CSCF and the determined media server.

Before the AS initiates the media resource request to the media routing functional entity, the method may further include: the AS receiving a stream media service request sent from the UE.

Before the AS receives the stream media service request sent from the UE, the method may further include: the UE initiating the stream media service request to the P-CSCF; the P-CSCF forwarding the stream media service request to the S-CSCF; and the S-CSCF triggering the stream media service request to the AS.

If no location information about the UE is carried in the stream media service request sent to the P-CSCF from the UE, before the P-CSCF forwards the stream media service request to the S-CSCF, the method may further include: the P-CSCF interacting with a Connection Locating Function (CLF) unit to obtain location information about the UE; and the P-CSCF adding the location information about the UE to the stream media service request.

The S-CSCF may trigger the stream media service request to the AS with CID, service type or the URI of the AS carried by the request as the trigger condition.

The media routing functional entity may be a Media Resource Broker Function (MRBF) and/or a media resource control functional entity having interfaces with the AS and the media resource control functional entity respectively or having interfaces with the S-CSCF and the media resource control functional entity respectively.

Another embodiment of the invention provides an IMS-based media resource scheduling method, including: requesting media server information by an AS from a media locating functional entity; determining a media server by the media locating functional entity and returning information about the determined media server to the AS; and initiating a media resource request to the determined media server by the AS.

The media server determined by the media locating functional entity may be one that the media locating functional entity selects from at least one media server in the present IMS domain and/or other IMS domains.

The media locating functional entity may determine the media server based on at least one of: CID; description information of the SDP for a UE; location information about the UE; capability information about the UE; context information about the UE or the user of the UE; and steam media content distribution information and/or status information about at least one media server in the present IMS domain and/or other IMS domains collected by the media locating functional entity.

The steam media content distribution information and/or status information about a media server in the present IMS domain or other IMS domains collected by the media locating functional entity may be obtained through interactions between the media locating functional entity and the media server and/or other media locating functional entities in the present IMS domain or other IMS domains.

The media locating functional entity may select a media server from at least one media server in other IMS domains by: the media locating functional entity interacting with a media locating functional entity in other IMS domains, and obtaining information about at least one media server; and the media locating functional entity selecting a media server from the at least one media server.

The media locating functional entity may also select a media server from at least one media server in other IMS domains by: the media locating functional entity forwarding a request for providing media server information to a media locating functional entity in other IMS domains; the media locating functional entity in other IMS domains selecting a media server from at least one media server in the other IMS domains; and the media locating functional entity in other IMS domains providing information about the selected media server to the media locating functional entity.

The media server determined or selected by the media locating functional entity may include a media resource control functional entity and a media resource delivery functional entity.

After the AS initiates the media resource request to the determined media resource control functional entity, the method may further include: the media resource control functional entity selecting one from a plurality of the controlled media resource delivery functional entities; and the media resource control functional entity returning information about the selected media resource delivery functional entity to the AS directly or via an IMS routing functional entity. The media resource control functional entity may select the media resource delivery functional entity based on media resource or content distribution information and information about the load of the media resource delivery functional entity. If a Serving Call Session Control Function (S-CSCF) is provided between the AS and the media locating functional entity, the AS requests media server information from the media locating functional entity by: the AS sending the media server request message to the S-CSCF; and the S-CSCF routing the media server request message to the media locating functional entity.

The S-CSCF may route the media server request message to the media locating functional entity by: routing the media server request message directly to the media locating functional entity when the S-CSCF identifies that the Request URI in the media server request message is the SIP URI of the media locating functional entity; and modifying the Request URI to the SIP URI of the media locating functional entity and routing the modified media server request message to the media locating functional entity when the Request URI is a wildcard.

The media locating functional entity may be a media resource locating function (MRLF) unit having interfaces with the AS and the media resource control functional entity respectively or having interfaces with the S-CSCF and the media resource control functional entity respectively.

Another embodiment of the invention provides an IMS-based media resource scheduling method, including the following steps performed by an AS: obtaining information about at least one media server in the present IMS domain and/or other IMS domains; determining a media server from the at least one media server; and initiating a media resource request to the determined media server.

The AS may obtain information about at least one media server in the present IMS domain and/or other IMS domains by: the AS requesting media server information from a media locating functional entity; and the media locating functional entity returning information about at least one media server in the present IMS domain and/or other IMS domains based on CID, steam media content distribution information and/or status information.

The AS may select a media server from the at least one media server based on at least one of: description information of the media SDP for a UE; location information about the UE; capability information about the UE; and context information about the UE or the user of the UE.

The AS may determine the media server based on at least one of: CID, description information of the media SDP for the UE, location information about the UE, capability information about the UE, and context information about the UE or the user of the UE carried in a stream media service request message, wherein the stream media service request message is received or initiated by the AS; and steam media content distribution information and/or status information about at least one media server in the present IMS domain and/or other IMS domains collected by the AS.

The steam media content distribution information and/or status information about the media server(s) in the present IMS domain collected by the AS may be obtained through interactions between the AS and a MRLF, MRBF or media server in the present IMS domain.

The steam media content distribution information and/or status information about the media server(s) in other IMS domains collected by the AS may be obtained through interactions between the AS and an MRLF, MRBF or media resource control functional entity in the present IMS domain and further interactions between the MRLF, MRBF or media resource control functional entity in the present IMS domain and an MRLF, MRBF or media resource control functional entity in other IMS domains.

The media server information obtained by the AS may include information about a media resource control functional entity and a media resource delivery functional entity.

After the AS initiates the media resource request to the determined media resource control functional entity, the method may further include: the media resource control functional entity selecting one from a plurality of the controlled media resource delivery functional entities; and the media resource control functional entity returning information about the selected media resource delivery functional entity to the AS directly or via an IMS routing functional entity.

The media resource control functional entity may select the media resource delivery functional entity based on media resource or content distribution information and information about the load of the media resource delivery functional entity. If a Serving Call Session Control Function (S-CSCF) is provided between the AS and the media server, the AS may initiate the media resource request to the determined media server by: the AS sending the media resource request message to the S-CSCF; and the S-CSCF routing the media resource request message to the media server.

The S-CSCF may route the media resource request message to the media server by: routing the media request message directly to the media server when the S-CSCF identifies that the Request URI in the resource request is the SIP URI of the media routing functional entity; and modifying the Request URI to the SIP URI of the media server and routing the modified media resource request message to the media server when the Request URI is a wildcard.

Before the AS initiates the media resource request to the media server, the method may further include: the AS receiving a stream media service request sent from the UE.

Before the AS receives the stream media service request sent from the UE, the method may further include: the UE initiating a stream media service request to the P-CSCF; the P-CSCF forwarding the stream media service request to the S-CSCF; and the S-CSCF triggering the stream media service request to the AS.

If no location information about the UE is carried in the stream media service request sent to the P-CSCF from the UE, before the P-CSCF forwards the stream media service request to the S-CSCF, the method further include: the P-CSCF interacting with a CLF to obtain location information about the UE when no location information about the UE is carried in the stream media service request; and the P-CSCF adding the location information about the UE to the stream media service request.

The S-CSCF may trigger the stream media service request to the AS with CID, service type or the URI of the AS carried by the request as the trigger condition.

The media resource control functional entity mentioned in the above method embodiments may be a MRFC in a Media Resource Function (MRF) or a functional entity independent of the MRFC, and the media resource delivery functional entity may be a Media Resource Function Processor (MRFP) in the MRF or a functional entity independent of the MRFP. For example, the MRFC may control at least one MRFP, and accordingly, the media resource control functional entity may control at least one media resource delivery functional entity. It is to be noted that the functional entity independent of the MRFC may have all functions of the MRFC, or may only have some functions of the MRFC. The functional entity independent of the MRFP may have all functions of the MRFP, or may only have some functions of the MRFP.

It is to be noted that in the embodiments of the inventive method, MRLF and/or MRBF may be introduced to the current IMS network architecture, so as to implement media resource scheduling in the IMS network architecture. The MRLF/MRBF may be disposed between the S-CSCF and the MRFC, or between the AS and the MRFC. Alternatively, the MRLF/MRBF may be disposed outside the IMS network architecture, where the MRLF/MRBF may have interfaces with the S-CSCF and the MRFC, or may have interfaces with the AS and the MRFC.

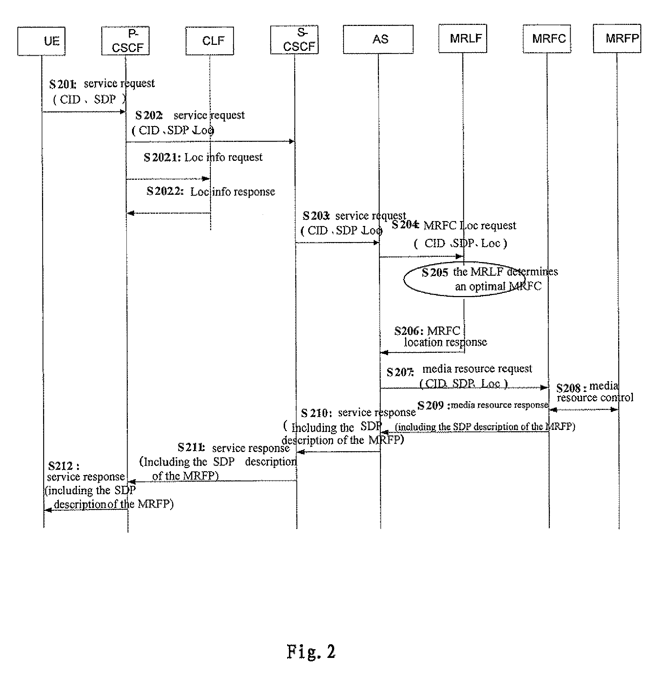

If the AS is in communication with the MRLF, the general procedure for media resource scheduling may be summarized as follows: the UE requests scheduling of the service from the AS, the AS obtains MRFC information through MRLF, where the AS forwards the request to the MRFC and the MRFC controls the MRFP to allocate media resources to the UE. In this way, media resource scheduling is performed. The specific flow is shown in Fig.2.

Step S201: service request (including CID and SDP)
The UE initiates a service request, which may be carried in a SIP message. The request at least includes CID of the media resource to be scheduled. Additionally, the URI of the AS, the capability information about the UE, the location information about the UE, and the description information of the media SDP for the UE may be carried. The capability information about the UE includes resolution information or the like. The UE may carry the location information about the UE in the header of the P-Access-Network-Info message. Furthermore, the capability information and location information about the UE may be obtained by looking up an associated functional entity in the stream media network system. If a service request initiated from the UE is a request for stream media service, the service request may be referred to as stream media service request.

Step S202: service request (including CID, SDP and Loc)
The P-CSCF forwards the request message sent from the UE to the S-CSCF. If no location information about the UE is carried in the request message initiated from the UE, the method may further include the following steps.
Step S202.1: location information request
The P-CSCF may obtain location information about the UE by looking up the CLF.
Step S202.2: location information response
The CLF feeds the location information about the UE back to the P-CSCF.

Step S203: service request (including CID, SDP and Loc)
The S-CSCF triggers the request message to the AS. The trigger condition may be service/CID, service type or the URI of the AS carried by the request.

Steps S204: MRFC location request (CID, SDP and Loc)
If the AS determines that the request is associated with content scheduling, information about the location of the UE and the CID is carried and the AS requests the MRLF to obtain an optimal MRFC for providing service to the UE.

Step S205: the MRLF determines an optimal MRFC
The MRLF selects an MRFC from multiple MRFCs to provide the best service for the content that the UE requests based on the location information of the UE, the CID requested by the UE and content distribution information and/or status information about each media server collected by the MRLF.

Step S206: MRFC location response
The MRLF returns a response message to the AS. The response message may include the address of the MRFC and may be carried in the SDP message.

Step S207: media resource request (CID, SDP and Loc)
Based on the address of the MRFC returned from the MRLF, the AS requests media resource by using the address. The request message may carry CID, location information about the UE, and description information of the media SDP for the UE. It is to be noted that the media resource request sent from the AS may be a forwarded stream media service request sent from the UE. In this case, the media resource request may be referred to as stream media service request. But the media resource request sent from the AS may be different from the stream media service request sent from the UE. That is, the AS may modify the stream media service request, or generate a media resource request from the stream media service request.

Step S208: media resource control
The MRFC and the MRFP may determine the media resource information through exchanges. For example, the Real Time Stream Protocol (RTSP) and/or Real-time Transport Protocol (RTP) address and ports may be determined. The exchange protocol may be H.248 protocol.

Step S209: media resource response (including the SDP description of the MRFP)
The MRFC feeds the media description information back to the AS, which may include the RTSP and/or RTP address and ports of the MRFP.

Step S210: service response (including the SDP description of the MRFP)
The AS sends the service response back to the S-CSCF, which may include the RTSP and/or RTP address and ports of the MRFP.

Step S211: service response (including the SDP description of the MRFP)
The S-CSCF forwards the response message to the P-CSCF.

Step S212: service response (including the SDP description of the MRFP)
The P-CSCF forwards the response message to the UE.

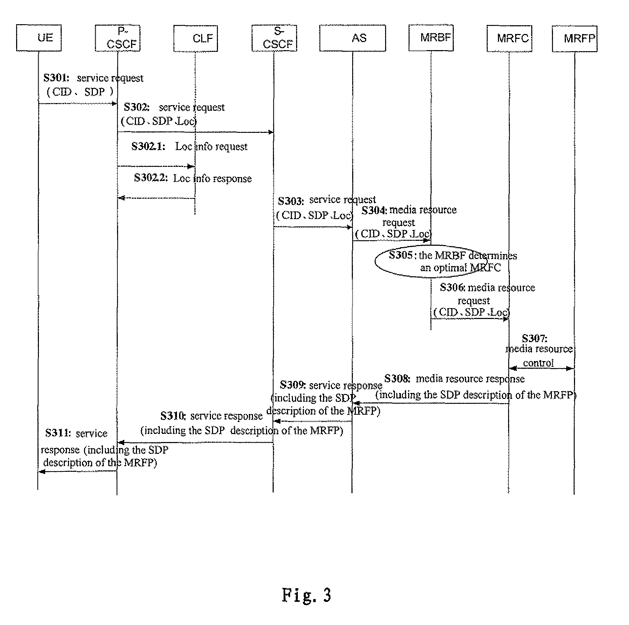

If the AS is in communication with the MRBF, the general procedure for media resource scheduling may be summarized as follows: the UE carrying information such as the service ID and the access location, requests the service from the AS; the AS forwards the request message to the MRBF, which determines an optimal MRFC to provide service for the requested service to the UE based on the information carried in the request message and the collected information about each media server; the request message is routed to this optimal MRFC; the MRFC controls the MRFP to allocate media resources to the service of the UE. In this way, media resource scheduling is performed. The specific flow is shown in Fig.3.

The steps S301, S302, S302.1, S302.2 and S303 are same as the steps S201, S202, S202.1, S202.2 and S203 shown in Fig.2.

Step S304: media resource request (CID, SDP and Loc)
If the AS determines that the request is connected with content scheduling, information such as the CID and the location of the UE is carried and the request is forwarded to the MRBF.

Step S305: the MRBF determines an optimal MRFC
The MRBF selects an MRFC from multiple MRFCs to provide the best service for the content that the UE requests based on the location information of the UE, the CID requested by the UE and the content distribution information and/or status information about each media server collected by the MRBF.

Step S306: media resource request (CID, SDP and Loc)
The MRBF requests media resources from the selected optimal MRFC. The request message may carry CID, the location information of the UE and the media SDP description of the UE. Meanwhile, the MRBF may choose not to join the route so that the media resource response will no longer pass the MRBF.

Step S307: media resource control
The MRFC and the MRFP may determine the media resource information through exchanges. For example, information such as the RTSP and/or RTP address and ports may be determined. The exchange protocol may be H.248.

Step S308: media resource response (including the SDP description of the MRFP)
The MRFC feeds the media description information back to the AS, which may include the RTSP and/or RTP address and ports of the MRFP.

Step S309: service response (including the SDP description of the MRFP)
The AS sends back the service response to the S-CSCF, which may include the RTSP and/or RTP address and ports of the MRFP.

Step S310: service response (including the SDP description of the MRFP)
The S-CSCF forwards the response message to the P-CSCF.

Step S311: service response (including the SDP description of the MRFP)
The P-CSCF forwards the response message to the UE.

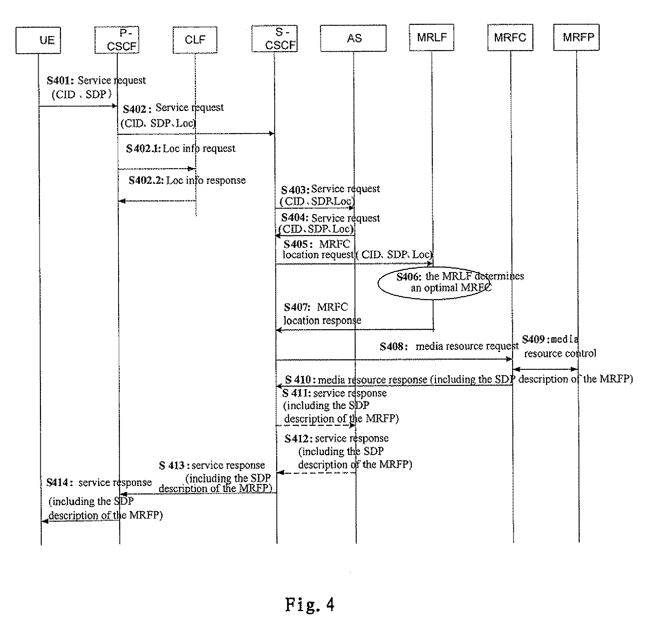

If the S-CSCF is in communication with the MRLF, the general procedure for media resource scheduling may be summarized as follows: the UE carrying information such as the service ID and the access location, requests the AS to schedule the service; the AS forwards the request message to the S-CSCF; the S-CSCF looks up the MRLF to locate the MRFC information, where the S-CSCF may forward the request message to the MRFC; the MRFC controls the MRFP to allocate media resources for the service of the UE. In this way, media resource scheduling is performed. The specific flow is shown in Fig.4.

The steps S401, S402, S402.1, S402.2 and S403 are same as the steps S201, S202, S202.1, S202.2 and S203 shown in Fig.2.

Step S404: service request (CID, SDP and Loc)

If the AS determines that the request is a stream media service request, the request is forwarded to the S-CSCF. The request message may be carried in a SIP message. The Request URI in the header of the SIP message may be the SIP URL of the MRLF or a wildcard. If the Request URI in the header of the SIP message is a wildcard, the S-CSCF may add a Request URI.

Step S405: MRFC location request (CID, SDP and Loc)

If the Request URI added by the AS is the SIP URL of the MRLF, the request message is routed directly. If the Request URI added by the AS is a wildcard, and the S-CSCF determines that the request is related to stream media content scheduling, the Request URI is modified to the SIP URL of the MRLF and the request message is forwarded so as to request an optimal MRFC.

Step S406: the MRLF determines an optimal MRFC
The MRLF selects a MRFC from multiple MRFCs to provide the best service for the content that the UE requests based on the location information of the UE, the CID requested by the UE and content distribution information and/or status information about each media server collected by the MRLF.

Step S407: MRFC location response
The MRLF returns a response message to the S-CSCF. The response message may include the address of the MRFC and may be carried in the SDP message.

Step S408: media resource request (CID, SDP and Loc)
Based on the address of the MRFC returned from the MRLF, the S-CSCF may request media resource by using the address. The request message may carry CID, location information about the UE, and description information of the media SDP for the UE.

Step S409: media resource control
The MRFC and the MRFP may determine the media resource information through exchanges. For example, the Real Time Stream Protocol (RTSP) and/or Real-time Transport Protocol (RTP) address and ports may be determined. The exchange protocol may be H.248.

Step S410: media resource response (including the SDP description of the MRFP)
The MRFC feeds the media description information back to the S-CSCF, which may include the RTSP and/or RTP address and ports of the MRFP.

Step S411: service response (including the SDP description of the MRFP)
The S-CSCF forwards the response to the AS, so that the AS may perform statistics processing on the service status information.

Step S412: service response (including the SDP description of the MRFP)
The AS forwards the response to the S-CSCF.

The above steps S411 and S412 depend on whether the AS needs to process the response message. If there is no need for processing, the two steps may be omitted, as denoted by the dashed line in the figure.

Step S413: service response (including the SDP description of the MRFP)
The S-CSCF forwards the response message to the P-CSCF.

Step S414: service response (including the SDP description of the MRFP)
The P-CSCF forwards the response message to the UE.

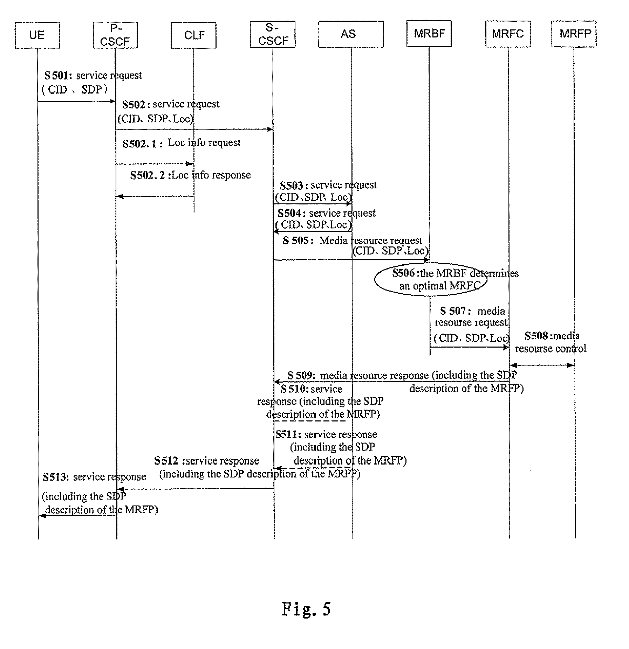

If the S-CSCF is in communication with the MRBF, the general procedure for media resource scheduling may be summarized as follows: the UE carrying information such as the service ID and the access location, requests the AS to schedule the stream media service; the AS forwards the request message to the S-CSCF; the S-CSCF forwards the request message to the MRBF; the MRBF determines an optimal MRFC to provide the best service for the requested service to the UE based on the information carried in the request message and the collected information about each media server; the request message is routed to the MRFC, and the MRFC controls the MRFP to allocate media resources for the service of the UE. In this way, media resource scheduling is performed. The specific flow is shown in Fig.5.

The steps S501, S502, S502.1, S502.2 and S503 are same as the steps S201, S202, S202.1, S202.2 and S203 shown in Fig.2.

Step S504: service request (including CID, SDP and Loc)
If the AS determines that the request is a stream media service request, the request is forwarded to the S-CSCF. The request message may be carried in a SIP message. The Request URI in the header of the SIP message may be the SIP URL of the MRLF or a wildcard. If the Request URI in the header of the SIP message is a wildcard, the S-CSCF may add a Request URI.

Step S505: media resource request (CID, SDP and Loc)
If the Request URI added by the AS is the SIP URL of the MRBF, the request message is routed directly. If the Request URI added by the AS is a wildcard, and the S-CSCF determines that the request is related to stream media content scheduling, the Request URI is modified to the SIP URL of the MRBF and the request message is forwarded.

Step S506: the MRBF determines an optimal MRFC
The MRBF selects an MRFC from multiple MRFCs to provide the best service for the content that the UE requests based on the location information of the UE, the CID requested by the UE and the content distribution information and/or status information about each media server collected by the MRBF.

Step S507: media resource request (CID, SDP and Loc)
The MRBF requests media resources from the selected optimal MRFC. The request message may carry CID, the location information of the UE and the media SDP description of the UE. Meanwhile, the MRBF may choose not to join the route so that the media resource response will no longer pass the MRBF.

Step S508: media resource control
The MRFC and the MRFP may determine the media resource information through exchanges. For example, information such as the RTSP and/or RTP address and ports may be determined. The exchange protocol may be H.248.

Step S509: media resource response (including the SDP description of the MRFP)
The MRFC feeds the media description information back to the S-CSCF, which may include the RTSP and/or RTP address and ports of the MRFP.

Step S510: service response (including the SDP description of the MRFP)
The S-CSCF forwards the response to the AS, so that the AS may perform statistics processing on the service status information.

Step S511: service response (including the SDP description of the MRFP)
The AS forwards the response to the S-CSCF.

The above steps S510 and S511 depend on whether the AS needs to process the response message. If there is no need for processing, the two steps may be omitted, as denoted by the dashed line in the figure.

Step S512: service response (including the SDP description of the MRFP)
The S-CSCF forwards the response message to the P-CSCF.

Step S513: service response (including the SDP description of the MRFP)
The P-CSCF forwards the response message to the UE.

In the above embodiments shown in Fig.2 and Fig.4, the MRLF may return several suitable MRFCs based on the media content distribution information and/or status information about the media server. The AS may then select the most suitable MRFC for the UE request based on other factors, such as the location of the UE, the capability and the preference of the UE, the policy of the operator and so on.

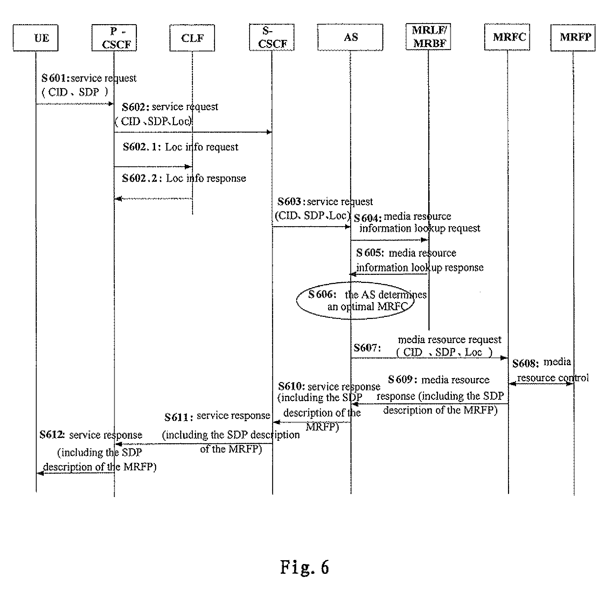

Furthermore, the AS may look up the MRLF for some related information, for example, the media content distribution information and/or status information about the media server. Meanwhile, the AS may select the most suitable MRFC based on other factors, such as the location of the UE, the capability and the preference of the UE, the policy of the operator and so on. The specific flow is shown in Fig.6.

The steps S601, S602, S602.1, S602.2 and S606 are same as the steps S201, S202, S202.1, S202.2 and S206 shown in Fig.2.

Step S604: media resource information lookup request
The AS looks up the MRLF/MRBF for media resource information. The information to be looked up may include information such as the media resource distribution and/or load of the media server. Furthermore, if there is no MRLF/MRBF in the IMS network architecture, the AS may look up an MRFC for the media resource information.

Step S605: media resource information lookup response
The MRLF/MRBF returns the media resource information to the AS. If there is no MRLF/MRBF in the IMS network architecture, the MRFC returns the media resource information to the AS.

Step S606: the AS determines an optimal MRFC
The AS selects an MRFC from multiple MRFCs to provide the best service for the content that the UE requests based on the location information of the UE, the CID requested by the UE and the collected content distribution information and/or status information about each media server.

Step S607: media resource request (CID, SDP and Loc)
Based on the address of the selected MRFC, the AS requests media resource by using the address. The request message may carry CID, location information about the UE, and description information of the media SDP for the UE.

Step S608: media resource control
The MRFC and the MRFP may determine the media resource information through exchanges. For example, the address and ports of the Real Time Stream Protocol (RTSP) and/or Real-time Transport Protocol (RTP) may be determined. The exchange protocol may be H.248 protocol.

Step S609: media resource response (including the SDP description of the MRFP)
The MRFC feeds the media description information back to the AS, which may include the RTSP and/or RTP address and ports of the MRFP.

Step S610: service response (including the SDP description of the MRFP)
The AS sends the service response back to the S-CSCF, which may include the RTSP and/or RTP address and ports of the MRFP.

Step S611: service response (including the SDP description of the MRFP)
The S-CSCF forwards the response message to the P-CSCF.

Step S612: service response (including the SDP description of the MRFP)
The P-CSCF forwards the response message to the UE.

The above flow charts have illustrated the embodiments of the method according to the invention. The invention also provides a media resource scheduling system. Detailed descriptions are made below to the general technical solution of the system embodiments of the invention.

A system embodiment of the invention provides an IMS-based media resource scheduling system, including: an AS; a MRLF or Media Resource Broker Function (MRBF); and at least one media server. The MRLF or MRBF is in communication with the AS and the at least one media server, the MRLF or MRBF is configured to determine a media server for providing stream media service to a UE, and the AS is configured to initiate or receive a stream media service request sent from the UE and return information about the media server determined by the MRLF or MRBF to the UE.

The media resource scheduling system may further include a Serving Call Session Control Function (S-CSCF), configured to forward messages between the AS and the MRLF or MRBF and/or between the AS and the at least one media server.

Another system embodiment of the invention provides an IMS-based media resource scheduling system, including: an AS; and at least one media server. The media server is configured to determine a media server for providing stream media service to a UE, and the AS is configured to initiate or receive a stream media service request sent from the UE and return information about the determined media server to the UE.

The media server may select a media server from at least one media server in the present IMS domain or other IMS domains.

The media resource scheduling system may further include an MRLF and/or MRBF, configured to collect content distribution information and/or status information about at least one media server for providing stream media service to the UE, and provide the collected content distribution information and/or status information to the AS.

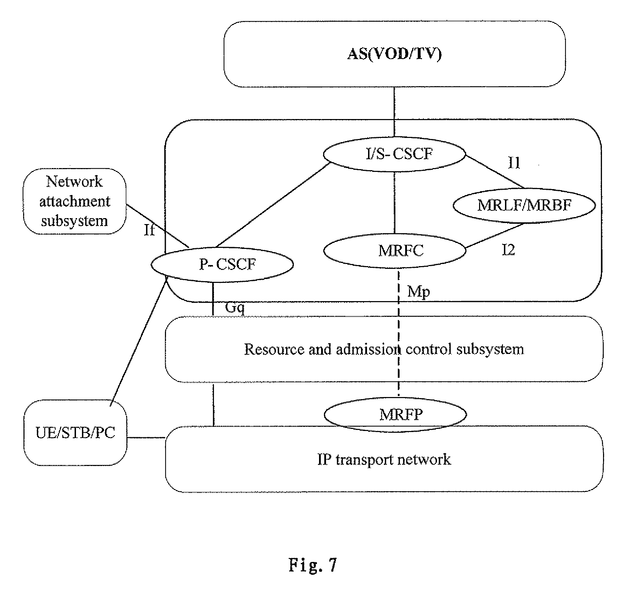

Detailed descriptions are made below to the above system embodiments with reference to Fig.7, Fig.8 and Fig.9, respectively.

As shown in Fig.7, the media resource scheduling system may include an AS, an I/S-CSCF, an MRLF/MRBF, an MRFC, an MRFP and a P-CSCF. The MRLF/MRBF is in communication with the I/S-CSCF and the MRFC via I1 interface and I2 interface respectively.

The MRLF/MRBF is configured to collect content distribution information and/or status information about at least one media server for providing stream media service to the UE, and provide the collected content distribution information and/or status information to the AS. The media resource scheduling system may further include a network attachment subsystem, a resource and admission control subsystem and an IP transport network. It is to be noted that the media resource scheduling system may be based on the IMS network architecture, and the MRLF/MRBF may be provided outside the IMS network architecture.

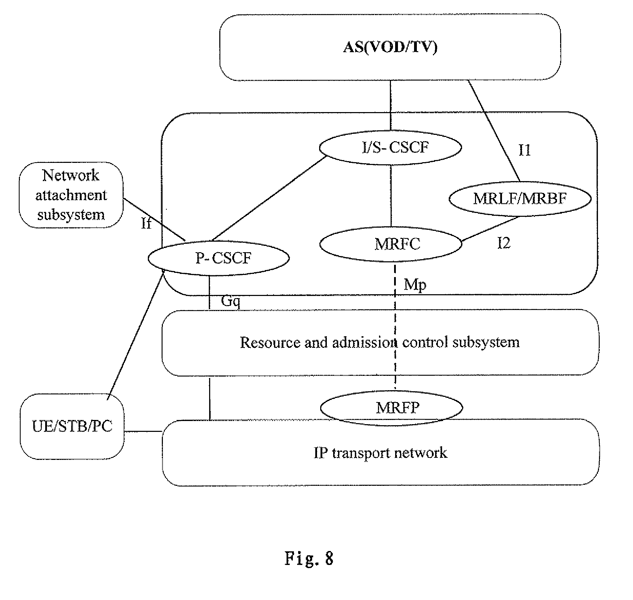

As shown in Fig.8, the media resource scheduling system may include an AS, an I/S-CSCF, an MRLF/MRBF, an MRFC, an MRFP and a P-CSCF. The MRLF/MRBF is in communication with the AS and the MRFC via I1 interface and I2 interface respectively. The media resource scheduling system may further include a network attachment subsystem, a resource and admission control subsystem and an IP transport network. It is to be noted that the media resource scheduling system may be based on the IMS network architecture and the MRLF/MRBF may be provided outside the IMS network architecture

In both Fig.7 and Fig.8, if the MRLF is in communication with the AS/S-CSCF, the I1 interface is a lookup interface, that is, the MRLF may return information about the selected MRFC to the AS/S-CSCF. If the MRBF is in communication with the AS/S-CSCF, the 12 interface is a resource request message interface, that is, the MRBF may route the request message to the selected MRFC, and meanwhile, it may decide whether to participate in subsequent message exchanges between the AS/S-CSCF and the media server. For example, when the MRBF routes the SIP request message, the MRBF will not participate in the subsequent exchanges if the URI of the MRBF is not added to the Record-Route or Route header field of the SIP message.

Descriptions are made below to the various functional entities and interfaces shown in Fig.7 and Fig.8.

The MRFC may provide the following functions related to media resource scheduling: record the resource distribution of each MRFC, for example, what kind of media content is stored on the MRFC; and collect the status information about each MRFP, for example, the port allocation and load of the MRFP.

The MRLF/MRBF may provide the following functions related to media resource scheduling: collect resource status information about the MRFC, for example, the available resource and the load; the MRLF selects a suitable MRFC based on the request from the AS/S-CSCF, for example, information about the media content/user location/QoS and the media distribution information and the load of the media distribution point collected by the MRLF; return information about the selected MRFC to the S-CSCF/AS; the MRBF routes the media resource request message from the AS/S-CSCF to the MRFC, and meanwhile exits from subsequent exchange between the AS/S-CSCF and the media server according to the routing policy. The MRBF may also interact with another MRBF in a different IMS domain, so as to obtain the resource distribution about each MRFC and the status information about the MRFP. In this manner, an MRFC may be determined to provide the best service for the service request related to media resource, and thus media resource scheduling among different IMS domains may be implemented.

The AS may provide the following functions related to media resource scheduling: determine whether the service request is a service request related to media resource; carry necessary information, such as media CID, user location information and so on and look up the MRLF to determine which MRFC the request message should be forwarded to; and forward the service request to the S-CSCF.

The I1 interface is a lookup interface through which the AS/S-CSCF requests a suitable MRFC from the MRLF, or a routing interface through which the AS/S-CSCF requests the media resource message from the MRBF. The communication between the AS/S-CSCF and the MRLF may be performed by using the Diameter protocol, and the communication between the AS/S-CSCF and the MRBF may be performed by using SIP.

The I2 interface is an interface through which the MRLF/MRBF and MRFC exchange content distribution information and information about the load of the MRFP so that the MRLF/MRBF selects a suitable media server. It is to be noted that in the embodiments of the above method, system and network architecture, both the MRLF and the MRBF may be provided inside the system and the network architecture, or combined into a single functional entity. If they are combined into a single functional entity and have interface with the AS, the AS may forward the service request to the MRLF/MRBF. After determining an optimal MRFC, the MRLF/MRBF may decide to route the request message directly or return the selected MRFC information to the AS. If they are combined into a single functional entity and have interface with the S-CSCF, the AS may forward the service request to the S-CSCF with the request message being carried in a SIP message. At this time, the Request URI address in the header of the SIP message may be the SIP URL of the MRLF/MRBF. The S-CSCF routes the request message to the MRLF/MRBF. The MRLF/MRBF determines the optimal MRFC and then decides to route the request message directly or return the selected MRFC information to the S-CSCF.

Furthermore, in a practical network deployment, the function of the MRLF/MRBF may also be performed by the MRFC. That is, through exchanges among the various MRFC, the media resource information and the status information may be exchanged, so as to obtain the resource information of the whole network. In this way, the AS/S-CSCF may initiate a media request to an MRFC in any network. The MRFC may route the media resource request to a suitable MRFC based on information obtained through interactions. It is to be noted that interactions among the MRFCs may performed among MRFCs in an IMS network domain or among different MRFCs in different IMS network domains.

The interactions among various MRFCs may be implemented by using the Peer-to-Peer (P2P) technique. In this case, each MRFC is equivalent to a node in the P2P network. Based on the P2P technique, scheduling of media resource may be performed, for example, by using the node membership group management, authentication, resource issuance, search, request, service provision and so on.

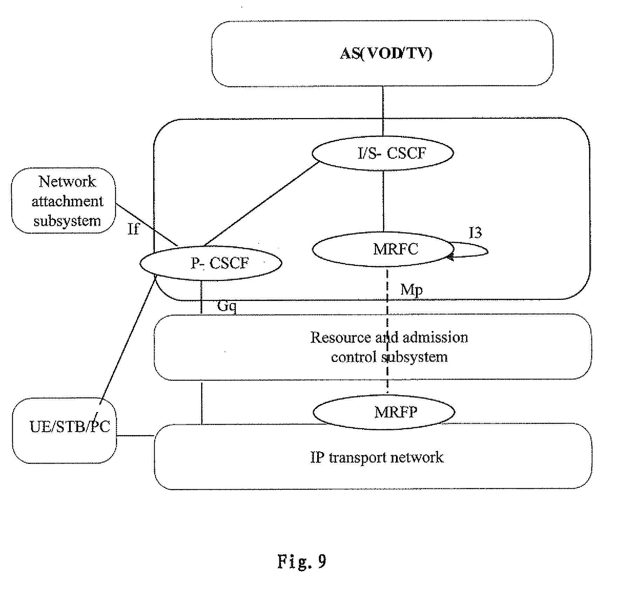

Fig.9 illustrates a network architecture in which the function of the MRLF/MRBF is performed by the MRFC. The MRFC has an 13 interface with an adjacent MRFC in the network. The 13 interface may be used to exchange the media resource information, status information and the like about the MRFPs controlled by each MRFC, and control the scheduling of media resource among different MRFPs. When receiving a media resource request, the MRFC may select an MRFC which provides the best service for the request based on its grasped information, and forwards the request message to the selected optimal MRFC. The optimal MRFC then decides the optimal MRFP based on the grasped resource distribution and loading information about each controlled MRFP.

Additionally, when requesting the MRBF for an optimal MRFC to provide service, if the MRFC is in another IMS domain, the MRBF forwards the request to an MRBF in another IMS domain. The MRBF in another IMS domain determines an optimal MRFC to provide the best media resource service based on the obtained content distribution information and/or status information about each media server, so as to implement media resource scheduling in different domains.

It is to be noted that information may be forwarded directly among the MRBFs in different domains, or be forwarded via a routing function in the IMS network. The procedure for information forwarding is as follows: a first MRBF sends a received request to a serving CSCF in the same domain; the serving CSCF in the same domain forwards the request to a serving CSCF in another domain; the serving CSCF in another domain forwards the request to a second MRBF. Furthermore, information may be exchanged between MRBFs in different domains, so that each MRBF may obtain content distribution information and/or status information about the MRFs in the present domain and other domains.

Furthermore, when looking up the MRLF for content distribution information and/or status information about the MRFs, if the optimal MRFC is in another IMS domain, the MRLF forwards the lookup request to an MRLF in another IMS domain. The MRLF in another IMS domain determines an optimal MRFC to provide the best media resource service based on the obtained content distribution information and/or status information about each media server and returns it to the MRLF in the present domain. The MRLF in the present domain returns it to the AS, and the AS then initiates a media resource request to the MRFC in another IMS domain via a routing function of the IMS network. In this way, media resource scheduling may be performed among different domains.

It is to be noted that information may be exchanged among the MRLFs in different domains, so that each MRLF may obtain content distribution information and/or status information about the MRFs in the present IMS domain and other IMS domains.

In the above embodiments of the invention, the MRLF or MRBF is introduced or the function of the MRFC is extended. Descriptions are made below to the internal structure of the MRLF, MRBF or the extended MRFC.

The MRLF may include a request receiving unit, configured to receive a request for providing media server information; a media server determining unit, configured to determine a media server for providing stream media service to a UE based on the received request; and a media server information providing unit, configured to provide information about the determined media server to an AS.

The MRLF may further include an information collecting unit, configured to collect content distribution information and/or status information about the media server; and/or a cross-domain information exchanging unit, configured to perform information exchanges with an MRLF in other IMS domains.

The MRBF may include a request receiving unit, configured to receive a media resource request; a media server determining unit, configured to determine a media server for providing stream media service to a UE based on the received media resource request; and a request forwarding unit, configured to forward the received media resource request to the determined media server.

The MRBF may further include an information collecting unit, configured to collect content distribution information and/or status information about the media server; and/or a cross-domain information exchanging unit, configured to perform information exchanges with an MRBF in other IMS domains.

The MRFC may include a request receiving unit, configured to receive a media resource request; a media server determining unit, configured to determine a media server for providing stream media service to a UE based on the received media resource request; and a request forwarding unit, configured to forward the received media resource request to the determined media server.

The MRFC may further include an information collecting unit, configured to collect content distribution information and/or status information about the media server; and/or an information exchanging unit, configured to perform information exchanges with an MRFC in the present IMS domain or other IMS domains; and/or an MRFP controlling and selecting unit, configured to control MRFPs and select one for providing stream media content to the UE from all the controlled MRFPs.

In the embodiments of the invention, all of the introduced MRLF and MRBF, the extended MRFC or the AS may collect content distribution information and/or status information about at least one media server in the same IMS domain and different IMS domains. In this regard, the media resource scheduling scheme of the invention may include a plurality of embodiments.

Furthermore, the MRFC and the MRFP may be combined into a single MRF. All or some functions of the MRF may be implemented by a functional entity independent of the MRF. Such a functional entity and the MRF may be collectively referred to as media server. Persons skilled in the art will appreciate that the MRF, the MRFC and the MRFP may correspond to the media server, the controlling part of the media server and the processing part of the media server, respectively.

As noted above, the disclosure has been described in terms of exemplary embodiments, but the scope of the invention is not limited in this context. From the teachings of this disclosure, any person skilled in the art will appreciate that other modifications and alternatives are possible, which shall fall in the scope of the invention.

## Claims

1. An IMS-based media resource scheduling method, comprising:
initiating, by an Application Server, AS, a media resource request, to a media routing functional entity;
determining, by the media routing functional entity, a media server; and routing, by the media routing functional entity, the media resource request to the determined media server.

2. The method according to claim 1, wherein the media server determined by the media routing functional entity is a media server that the media routing functional entity selects from at least one media server in the present IMS domain and/or other IMS domains.

3. The method according to claim 1, wherein the media routing functional entity determines the media server based on at least one of:
Content Identifier, CID;
description information of the media Session Description Protocol, SDP for a User Equipment, UE;
location information about the UE;
capability information about the UE;
context information about the UE or the user of the UE; and
steam media content distribution information and/or status information about at least one media server in the present IMS domain and/or other IMS domains collected by the media routing functional entity.

4. The method according to claim 3, wherein the steam media content distribution information and/or status information about a media server in the present IMS domain or other IMS domains collected by the media routing functional entity is obtained through interactions between the media routing functional entity and the media server and/or other media routing functional entities in the present IMS domain or other IMS domains.

5. The method according to claim 2, wherein the media routing functional entity selecting a media server from at least one media server in the other IMS domains comprises:
interacting, by the media routing functional entity, with a media routing functional entity in the other IMS domains and obtaining information about the at least one media server; and
selecting, by the media routing functional entity, a media server from the at least one media server.

6. The method according to claim 2, wherein the media routing functional entity selecting a media server from at least one media server in other IMS domains comprises:
forwarding, by the media routing functional entity, the media resource request to a media routing functional entity in other IMS domains;
selecting, by the media routing functional entity in other IMS domains, a media server from at least one media server in the other IMS domains; and
providing, by the media routing functional entity in other IMS domains, information about the selected media server to the media routing functional entity.

7. The method according to any one of claims 1 to 6, wherein the media server determined or selected by the media routing functional entity comprises a media resource control functional entity and a media resource delivery functional entity.

8. The method according to claim 7, wherein the media routing functional entity routes the media resource request to the determined media resource control functional entity, the method further comprising:
selecting, by the media resource control functional entity, one from the controlled media resource delivery functional entities; and
returning, by the media resource control functional entity, information about the selected media resource delivery functional entity to the AS directly or via an IMS routing functional entity.

9. The method according to claim 8, wherein the media resource control functional entity selects the media resource delivery functional entity based on media resource or content distribution information and information about the load of the media resource delivery functional entities.

10. The method according to claim 1, if a Serving Call Session Control Function (S-CSCF) unit is provided between the AS and the media routing functional entity, wherein the AS initiating a media resource request to the media routing functional entity comprises:
sending, by the AS, the media resource request message to the S-CSCF; and
routing, by the S-CSCF, the media resource request message to the media routing functional entity.

11. The method according to claim 10, wherein the S-CSCF routes the media resource request message to the media routing functional entity by:
routing the request message to the media routing functional entity directly when the S-CSCF identifies that the Request URI in the media resource request message is the SIP URI of the media routing functional entity; and
modifying the Request URI to the SIP URI of the media routing functional entity and routing the modified media resource request message to the media routing functional entity when the Request URI is a wildcard.

12. The method according to claim 1 or 10, wherein when the media routing functional entity routes the media resource request to the determined media server, the method further comprises:
determining whether to participate in subsequent message exchanges between the AS or S-CSCF and the determined media server;
adding its own URI to the Record-Route or Route field of the media resource request message when determining to participate in subsequent message exchanges between the AS or S-CSCF and the determined media server; and
not adding its own URI to the Record-Route or Route field of the media resource request message when determining not to participate in subsequent message exchanges between the AS or S-CSCF and the determined media server.

13. The method according to claim 1, wherein before the AS initiates the media resource request to the media routing functional entity, the method further comprises:
initiating, by the UE, a stream media service request to a P-CSCF;
interacting, by the P-CSCF, with a Connection Locating Function (CLF) unit to obtain location information about the UE when no location information about the UE is carried in the stream media service request; and
adding, by the P-CSCF, the location information about the UE to the stream media service request.

14. The method according to claim 13, wherein after the UE initiates the stream media service request to the P-CSCF, the method further comprises:
forwarding, by the P-CSCF, the stream media service request to the S-CSCF; and
triggering, by the S-CSCF, the stream media service request to the AS with CID, service type or the URI of the AS carried by the request as the trigger condition.

15. The method according to claim 1, wherein the media routing functional entity is a Media Resource Broker Function , MRBF, and/or a media resource control functional entity having interfaces with the AS and the media resource control functional entity respectively or having interfaces with the S-CSCF and the media resource control functional entity respectively.

16. The method according to claim 7, wherein the media resource control functional entity is a Media Resource Function Controller, MRFC, in a Media Resource Function, MRF, or a functional entity independent of the MRFC, and the media resource delivery functional entity is a Media Resource Function Processor, MRFP, in a Media Resource Function, MRF, or a functional entity independent of the MRFP.

17. An IMS-based media resource scheduling method, comprising:
requesting, by an Application Server, AS, media server information from a media locating functional entity;
determining, by the media locating functional entity, a media server and returning information about the determined media server to the AS; and
initiating, by the AS, a media resource request to the determined media server.

18. The method according to claim 17, wherein the media server determined by the media locating functional entity is one that the media locating functional entity selects from at least one media server in the present IMS domain and/or other IMS domains.

19. The method according to claim 17, wherein the media locating functional entity determines the media server based on at least one of:
Content identifier, CID;
description information of the media Session Description Protocol, SDP, for a User Equipment, UE;
location information about the UE;
capability information about the UE;
context information about the UE or the user of the UE; and
steam media content distribution information and/or status information about at least one media server in the present IMS domain and/or other IMS domains collected by the media locating functional entity.

20. The method according to claim 19, wherein the steam media content distribution information and/or status information about a media server in the present IMS domain or other IMS domains collected by the media locating functional entity is obtained through interactions between the media locating functional entity and the media server and/or other media locating functional entities in the present IMS domain or other IMS domains.

21. The method according to claim 18, wherein the media locating functional entity selects a media server from at least one media server in other IMS domains by:
interacting with a media locating functional entity in the other IMS domains, and obtaining information about at least one media server; and
selecting a media server from the at least one media server.

22. The method according to claim 18, wherein the media locating functional entity selects a media server from at least one media server in other IMS domains by:
the media locating functional entity forwarding a request for providing media server information to a media locating functional entity in other IMS domains;
the media locating functional entity in other IMS domains selecting a media server from at least one media server in the other IMS domains; and
the media locating functional entity in the other IMS domains providing information about the selected media server to the media locating functional entity.

23. The method according to any one of claims 17 to 22, wherein the media server determined or selected by the media locating functional entity comprises a media resource control functional entity and a media resource delivery functional entity.

24. The method according to claim 23, wherein after the AS initiates the media resource request to the determined media resource control functional entity, the method further comprises the following steps performed by the media resource control functional entity:
selecting one from the controlled media resource delivery functional entities; and returning information about the selected media resource delivery functional entity to the AS directly or via an IMS routing functional entity.

25. The method according to claim 24, wherein the media resource control functional entity selects the media resource delivery functional entity based on media resource or content distribution information and information about the load of the media resource delivery functional entities.

26. The method according to claim 17, wherein if a Serving Call Session Control Function, S-CSCF, is provided between the AS and the media locating functional entity, the AS requests media server information from the media locating functional entity by:
sending, by the AS, the request for media server information to the S-CSCF; and routing, by the S-CSCF, the request for media server information to the media locating functional entity.

27. The method according to claim 26, wherein the S-CSCF routes the request for media server information to the media locating functional entity by:
routing the request for media server information to the media locating functional entity directly when the S-CSCF identifies that the Request URI in the request for media server information is the SIP URI of the media locating functional entity; and
modifying the Request URI to the SIP URI of the media locating functional entity and routing the modified request for media server information to the media locating functional entity when the Request URI is a wildcard.

28. The method according to claim 17, wherein the media locating functional entity is a media resource locating function, MRLF, unit having interfaces with the AS and the media resource control functional entity respectively or having interfaces with the S-CSCF and the media resource control functional entity respectively.

29. The method according to claim 23, wherein the media resource control functional entity is a Media Resource Function Controller, MRFC, in a Media Resource Function, MRF, or a functional entity independent of the MRFC, and the media resource delivery functional entity is a Media Resource Function Processor, MRFP, in a Media Resource Function, MRF, or a functional entity independent of the MRFP.

30. An IMS-based media resource scheduling method, comprising: obtaining information about at least one media server in the present IMS domain and/or other IMS domains;
determining a media server from the at least one media server; and
initiating a media resource request to the determined media server.

31. The method according to claim 30, wherein obtaining information about at least one media server in the present IMS domain and/or other IMS domains comprises:
requesting, by the AS, media server information from a media locating functional entity; and
returning, by the media locating functional entity, information about at least one media server in the present IMS domain and/or other IMS domains based on CID, steam media content distribution information and/or status information.

32. The method according to claim 31, wherein the AS selects a media server from the at least one media server based on at least one of:
description information of the media Session Description Protocol, SDP, for a User Equipment, UE, location information about the UE, capability information about the UE, and context information about the UE or the user of the UE.

33. The method according to claim 30, wherein the AS determines the media server based on at least one of:
Content Identifier, CID, description information of the media Session Description Protocol, SDP, for a User Equipment, UE, location information about the UE, capability information about the UE, and context information about the UE or the user of the UE carried in a stream media service request message, wherein the stream media service request message is received or initiated by the AS; and
steam media content distribution information and/or status information about at least one media server in the present IMS domain and/or other IMS domains collected by the AS.

34. The method according to claim 30, wherein the steam media content distribution information and/or status information about the media server(s) in the present IMS domain collected by the AS is obtained through interactions between the AS and a MRLF, MRBF or media server in the present IMS domain.

35. The method according to claim 30, wherein the steam media content distribution information and/or status information about the media server(s) in other IMS domains collected by the AS is obtained through interactions between the AS and an MRLF, MRBF or media resource control functional entity in the present IMS domain and further interactions between the MRLF, MRBF or media resource control functional entity in the present IMS domain and an MRLF, MRBF or media resource control functional entity in other IMS domains.

36. The method according to claim 30, wherein the media server information obtained by the AS comprises information about a media resource control functional entity and a media resource delivery functional entity.

37. The method according to claim 36, wherein the AS initiates the media resource request to the determined media resource control functional entity, the method further comprising:
selecting, by the media resource control functional entity, one from the controlled media resource delivery functional entities; and
returning, by the media resource control functional entity, information about the selected media resource delivery functional entity to the AS directly or via an IMS routing functional entity.

38. The method according to claim 37, wherein the media resource control functional entity selects the media resource delivery functional entity based on media resource or content distribution information and information about the load of the media resource delivery functional entity.

39. The method according to claim 30, wherein if a Serving Call Session Control Function , S-CSCF, is provided between the AS and the media server, the AS initiates the media resource request to the determined media server by:
sending, by the AS, the media resource request message to the S-CSCF; and
routing, by the S-CSCF, the media resource request message to the media server.

40. The method according to claim 39, wherein the S-CSCF routes the media resource request message to the media server by:
routing the media request message directly to the media server when the S-CSCF identifies that the Request URI in the resource request is the SIP URI of the media routing functional entity; and
modifying the Request URI to the SIP URI of the media server and routing the modified media resource request message to the media server when the Request URI is a wildcard.

41. The method according to claim 30, wherein before the AS initiates the media resource request to the media routing functional entity, the method further comprises:
initiating, by the UE, a stream media service request to a P-CSCF;
interacting, by the P-CSCF, with a CLF to obtain location information about the UE when no location information about the UE is carried in the stream media service request; and
adding, by the P-CSCF, the location information about the UE to the stream media service request.

42. The method according to claim 41, wherein after the UE initiates the stream media service request to the P-CSCF, the method further comprises:
forwarding, by the P-CSCF, the stream media service request to the S-CSCF; and
triggering, by the S-CSCF, the stream media service request to the AS with CID, service type or the URI of the AS carried by the request as the trigger condition.

43. The method according to claim 36, wherein the media resource control functional entity is a Media Resource Function Controller, MRFC, in a Media Resource Function, MRF, or a functional entity independent of the MRFC, and the media resource delivery functional entity is a Media Resource Function Processor (MRFP) in a Media Resource Function (MRF) or a functional entity independent of the MRFP.

44. An IMS-based media resource scheduling system, comprising:
an Application Server, AS, a Media Resource Locating Function, MRLF or Media Resource Broker Function , MRBF, and at least one media server,
wherein the MRLF or MRBF is in communication with the AS and the at least one media server,
the MRLF or MRBF is configured to determine a media server for providing stream media service to a User Equipment, UE, and
the AS is configured to initiate or receive a stream media service request sent from the UE and return information about the determined media server to the UE.

45. The system according to claim 44, further comprising:
a Serving Call Session Control Function (S-CSCF), configured to forward messages between the AS and the MRLF or MRBF and/or between the AS and the at least one media server.

46. An IMS-based media resource scheduling system, comprising:
an Application Server, AS, and at least one media server,
wherein the media server is configured to determine a media server for providing stream media service to a User Equipment, UE, and
the AS is configured to initiate or receive a stream media service request sent from the UE and return information about the determined media server to the UE.

47. The system according to claim 46, wherein the media server selects a media server from at least one media server in the present IMS domain or other IMS domains.

48. The system according to claim 46, further comprising:
an MRLF and/or MRBF, configured to collect content distribution information and/or status information about at least one media server for providing stream media service to the UE, and provide the collected content distribution information and/or status information to the AS.

49. An IMS-based Media Resource Locating Function, MRLF, comprising:
a request receiving unit, configured to receive a request for providing media server information;
a media server determining unit, configured to determine a media server for providing stream media service to a User Equipment, UE, based on the received request for providing media server information; and
a media server information providing unit, configured to provide information about the determined media server to an Application Server, AS.

50. The MRLF according to claim 49, further comprising:
an information collecting unit, configured to collect content distribution information and/or status information about the media server; and/or
a cross-domain information exchanging unit, configured to exchange information with a MRLF in other IMS domains.

51. An IMS-based Media Resource Broker Function, MRBF, comprising:
a request receiving unit, configured to receive a media resource request;
a media server determining unit, configured to determine a media server for providing stream media service to a User Equipment, UE based on the received media resource request; and
a request forwarding unit, configured to forward the received media resource request to the determined media server.

52. The MRBF according to claim 51, further comprising:
an information collecting unit, configured to collect content distribution information and/or status information about the media server; and/or
a cross-domain information exchanging unit, configured to exchange information with a MRBF in other IMS domains.

53. An IMS-based media resource control functional entity, independent of a Media Resource Function Controller, MRFC, and configured to control at least one media resource delivery functional entity which stores stream media content, comprising:
a request receiving unit, configured to receive a media resource request;
a media server determining unit, configured to determine a media server for providing stream media service to a User Equipment, UE, based on the received media resource request; and
a request forwarding unit, configured to forward the received media resource request to the determined media server.

54. The media resource control functional entity according to claim 53, further comprising:
an information collecting unit, configured to collect content distribution information and/or status information about the media server; and/or
an information exchanging unit, configured to exchange information with a media resource control functional entity in the present IMS domain or other IMS domains; and/or
a media resource delivery functional entity controlling and selecting unit, configured to control media resource delivery functional entities and select one for providing stream media content to the UE from all the controlled media resource delivery functional entities.

55. An IMS-based Media Resource Function Controller, MRFC, comprising:
a request receiving unit, configured to receive a media resource request;
a media server determining unit, configured to determine a media server for providing stream media service to a User Equipment, UE, based on the received media resource request; and
a request forwarding unit, configured to forward the received media resource request to the determined media server.
